# EUROPEAN PATENT APPLICATION

(11) **EP 3 154 004 A1**
(43) Date of publication of application: **12.04.2017**
(21) Application number: 15188830.2
(22) Date of filing: 07.10.2015
(51) Int. Cl.: G06Q 10/06, G06Q 50/08

(54) **CONSTRUCTIONS SITE MANAGEMENT SYSTEM AND METHOD**

(71) Applicant: Luxembourg Institute of Science and Technology (LIST), 4362 Esch-sur-Alzette (LU)
(72) Inventor: HARBOUCHE, Lahcène, 57310 Bousse (FR)
(74) Representative: Lecomte & Partners

(57) **Abstract**

The invention is directed to a method and a system (4) for controlling a construction site (2), said method and system automatically scheduling, via a computer (6), building tasks involving the use of building materials (12) and/or tools (24, 26, 28) on said site, the building materials (12) and/or the tools (24, 26, 28) being equipped with wireless communication interfaces (10, 22, 26), the construction site (2) comprising at least one wireless communication station (8) communicating with the wireless communicating interfaces (10, 22, 26), and the automatic tasks scheduling verifying the availability on the site (2) of at least one of the building materials (12) and/or of at least one of the tools (24, 28, 30), and/or authorizes the operation of at least one of the tools (24, 28, 30), via the at least one wireless communication station (8) and the wireless communication interfaces (10/34, 22, 26).

## Description

### Technical field

The invention is directed to the field of construction, more particularly to the management of construction sites.

### Background art

Prior art patent document published US 2003/0050871 A1 discloses a system and a method for assisting a contractor in managing information associated with a construction project. The system and method are configured for gathering, maintaining and disseminating the voluminous amount of information associated with a construction project. The information is visually represented. The system is computer based and can communicated with mobile devices like PDA devices (Personal Digital Assistant). A contractor entering the construction site can then collect information and enter it into the PDA, said information being then transmitted to the central computer of the system. Some of the items installed on the construction site can be equipped with RFID (Radio Frequency Identification) tags and these can be detected by the PDA or any specific detection device. The system and method of that reference are essentially directed to the control of already achieved tasks in order to provide a complete and up-to-date situation of the project. They fail to automatically manage the construction project.

Prior art patent document published US 2010/0049577 A1 discloses a system and a method for monitoring and controlling the performance of a task such as the construction of a building. A task is divided into modules and the functions required for each module are identified. This approach is essentially directed to subcontractors whose tasks are structured and analysed for determining during their course whether the announced timing will be respected. Similarly to the above previous reference, the check of the status of the tasks can be made via a PDA device so that the collected information can be downloaded to a central computer. The teaching of this reference is essentially directed to the detailed and recurrent check of the progress of tasks. If fails therefore to automatically manage the construction project.

Prior art patent document published US 2013/0138606 A1 discloses a method and system for managing information at a construction site. The system comprises a central computer, serving information management system, communicating with handheld devices like PDA devices at a construction site. Similarly to the two previous references, the handheld devices serve essentially for collecting data about the tasks at the construction site, the data being then transmitted to the central computer. The central computer can also communicate via user interfaces with handheld tools like a drilling machine. The purpose of this remote communication is to control the proper use and positioning of the tool. Signals or cues are transmitted to the operator to assist him in properly positioning and using the tool. The remote communication permits also to collect information that the task related to the tool is achieved. Such user interfaces are however complex and expensive. In addition, the advantage provided appears to be limited in that the intrinsic positioning error of such interface can lead to erroneous information about the achievement of the task associated with the tool. Also, the operator might not consider the signals provided by the interface so that the utility of the interface could be limited compared to its possibilities.

Generally speaking, the above cited prior art is essentially based on the collection of information of the construction project where said information is collected essentially manually. Such human actions are expensive, are not necessarily achieved in real time and can sometimes be erroneous or even lacking. The safety of for the operators working on the construction site can also be put at risk if the information collected is incomplete, not up to date and/or erroneous. There is a need for a more automated and safer supervision and control of a construction project.

### Summary of invention

### Technical Problem

The invention has for technical problem to provide an improved supervision and control of a construction project, in particular a more automated and safer supervision and control of said project.

### Technical solution

The invention is directed to a method for controlling a construction site, said method automatically scheduling, via a computer, building tasks involving the use of building materials and/or tools on said site; wherein the building materials and/or the tools are equipped with wireless communication interfaces; the construction site comprises at least one wireless communication station communicating with the wireless communicating interfaces of the building materials and/or of the tools; the automatic tasks scheduling verifies the availability on the site of at least one of the building materials and/or of at least one of the tools, and/or authorizes the operation of at least one of the tools, via the wireless communication station and the wireless communication interfaces.

According to a preferred embodiment, the automatic tasks scheduling comprises the issuance and transmission of task notices to mobile devices. The automatic tasks scheduling can be subject to validation by an operator.

According to a preferred embodiment, at least one of the task notices is issued and send to the mobile devices only when the availability of the building material(s) required for said task(s) has been positively verified.

According to a preferred embodiment, the issuance of at least one task notice is accompanied by the issuance of a signal to the tool(s), said signal authorizing operation of said tool(s).

According to a preferred embodiment, the tool(s) whose operation is authorized together with the issuance of the task notice(s) correspond(s) to the task(s) of said task notice(s).

According to a preferred embodiment, the wireless communication interfaces comprise tags and wireless, preferably RFID, tag detector(s), said tags being applied onto the building material(s).

According to a preferred embodiment, the tags are applied to the building material(s) before its/their discharge at the construction site, preferably before its/their arrival at the site, so as to permit the automatic detection of its/their availability.

According to a preferred embodiment, the building materials are taken from the following list: metallic beams, concrete beams, wood beams, concrete reinforcing mesh, cement, building blocks, tiles, insulation material, and any combination.

According to a preferred embodiment, the verification of the availability on the site of the building material(s) is made at different locations of the site, said verification being location dependent. By location dependent it is meant that the building material(s) is/are considered as available when present not only on the site but also at one or several locations that is/are related to the task.

According to a preferred embodiment, the at least one wireless communication station comprises several wireless communication stations different distant locations of the site.

According to a preferred embodiment, the site comprises at least one area having a controlled access operated through a communication interface communicating with the at least one communication station, the automatic tasks scheduling authorizing access said area(s).

According to a preferred embodiment, the access to the at least one area with controlled access is controlled by electrically controlled locks.

According to a preferred embodiment, the tools are taken from the following list: drilling machine, jackhammer, concrete mixer, compressor for pneumatic jackhammer, crane, construction vehicle and any combination thereof.

According to a preferred embodiment, the tool(s) comprise at least one vehicle equipped with a GPS beacon communicating the GPS location of said vehicle(s) to at least one of the communication interfaces.

According to a preferred embodiment, the automatic tasks scheduling prevents access to at least one of the materials and/or tools, and/or prevents the operation of at least one of the tools, via the wireless communication station and the wireless communication interfaces, said material(s) and tool(s) being needed for a future task.

The invention is also directed to a system for controlling a construction site, comprising: a computer; at least one wireless communication station to be located on site and configured for communicating with the computer; at least one wireless communication interface configured for communicating with the at least one communication station; wherein the at least one wireless communication interface is operatively associated to at least one building material and/or is operatively connected to at least one tool for authorizing operation of said tool and/or is operatively connected to controlled access to at least one building material and/or at least one tool; and the computer is configured executing the method according to the invention.

### Advantages of the invention

The invention is particularly interesting in that it provides an improvement in the efficiency and the safety of the construction process. The control system interacts automatically with elements of the construction site, like the tools and the building materials. It avoids situations where a task is started without having onsite the required materials and/or tools. It avoids also situations where some of the tools can be operated by the workers on the site when the use of such tools is inappropriate, e.g. for logistical or safety reasons. The invention provides therefore an interactive construction site where the constructions tasks can be performed with a higher efficiency and a higher safety for the workers.

### Brief description of the drawings

Figure 1 is schematic representation of a construction site with a control system according to the invention.
Figure 2 is a schematic view of the control system according to the invention.
Figure 3 is a schematic view of a storing location at the construction site, illustrating the wireless detection of availability of construction material by the control system according to the invention.
Figure 4 is a schematic illustration of the wireless detection and location of construction vehicles by the control system according to the invention.
Figure 5 is a flowchart showing the interactions between the control system according to the invention and the construction site.

### Description of an embodiment

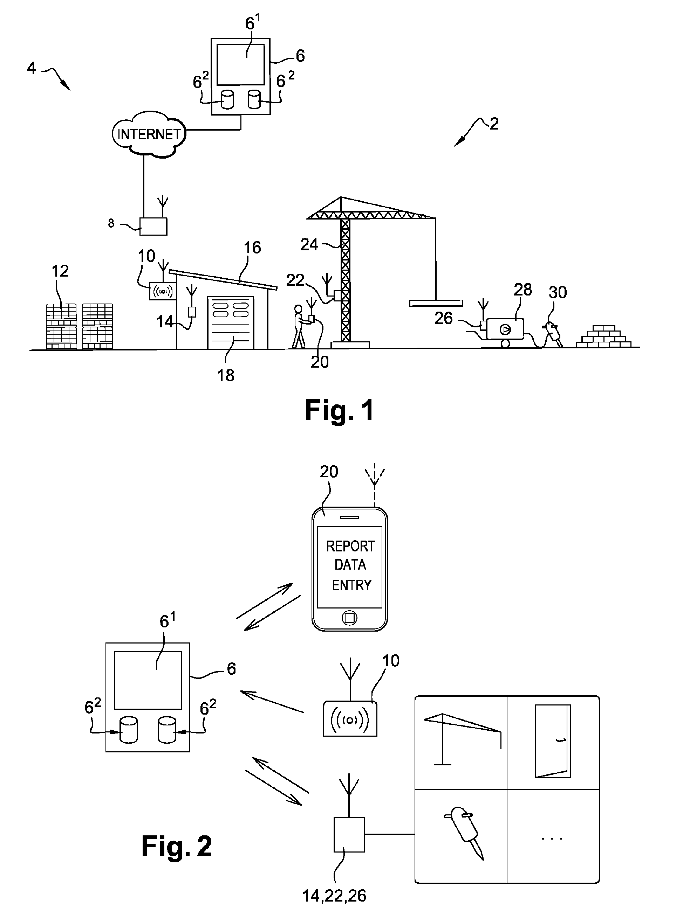

Figure 1 illustrates in a schematic way a construction site 2 and a control system 4 of said site. The control system 2 comprises a computer unit 6 that is configured to communicate with the construction site. To that end, the computer unit 6 is connected via internet to a communication station 8 located at the site 2. It is however understood that the computer unit 6 can also be located at the site and communicate directly with the communication station 8. In figure 1, only one communication station 8 is represented. Several communication stations can also be provided, depending among others of the size of the site and the transmission quality of the signals on said site.

The computer unit 6 is represented schematically as comprising a computer 6¹ and databases 6². It is however understood that this is one possible configuration of the computer unit, other configurations, as such well-known from the skilled person are also possible.

The communication station 8 is configured to communicate with different communication interfaces arranged at the different location at the construction site 2. This communication is advantageously wireless, whereas this communication could also in certain circumstances be by wire.

A first onsite communication interface 10 is located near a storage area for construction material 12 so as to automatically detect the presence of such material. The detection can be based on various known technologies, like capacitive or optical technologies. The construction material 12 can be equipped with RFID tags, e.g. in the form of as sticker applied to the external surface of the material or its packing film. In the presence case, the material consist of building blocks arranged on pallets. A RFID tag can be applied to each pallet. The material can of course be of various types, like concrete or steel beams, roof tiles, cement, paving or insulation material.

A second onsite communication interface 14 is placed on a cabin or utility building 16 for storing material like construction material or construction tools. More specifically, the communication interface 14 is connected to the opening system of the door 18 of the cabin 16. In the case of an electric system, the communication interface 14 can operate the opening and closing of the door 18. In the case where the door is opened and closed manually, the communication interface 14 is configured for locking and unlocking the door 18 a closed position. It can also be configured for detecting an open and close state of said door. The computer unit 6 via the second communication interface 14 can therefore authorize the opening of the door, thereby authorizing access to the material and/or tool stored therein.

A third onsite communication interface 20 can be a mobile device like a tablet PC, a mobile phone or any kind of mobile communication device with a display. An operator being on the site can then be informed of the status of the construction program and can also enter information about said construction program, that information being then transferred to the computer unit 6 and being stored therein.

A fourth onsite communication interface 22 can be operatively connected to the control system of a crane 24. The operative connection can be configured to remotely authorize operation of the crane. If can also be configured to limit the operation of the crane, e.g. to a maximum load or a given angular sector.

A fifth onsite communication interface 26 is located or at least operatively connected to an air compressor 28 providing compressed air to various construction tools like for example a jackhammer 30. Similarly, the operation of the compressor 28 can be controlled, i.e. authorized, by the communication interface 26 in a remote fashion.

Through the above mentioned different onsite communication interfaces, the computer unit 6 can not only collect real time information about the construction site but also control the operations of said site. This provides therefore a higher efficacy and also a better control of the security of the workers and operators on the site.

Figure 2 illustrates in a schematic way the communication between the computer unit 6 and the different communication interfaces. The computer unit 6 communicates, advantageously in a permanent and continuous manner, with the communication interfaces 10, 14, 20, 22 and 26.

With the mobile communication interface 20, the computer unit 6 can send information about task(s) to be achieved or about the progress of one or several tasks, in the form of reports or notices. When issuing task notices, the computer unit can request approval by one or several operator. The task scheduling can be set-up in a fully automatic mode that does not request a final approval or in semi-automatic mode where each or some of the tasks have to be validated by at least one operator. It can also collect information or data about the construction, like the progress of various tasks or the availability of personal and/or material.

The RFID onsite communication interface 10 is particularly useful for detecting the presence of material, vehicles and/or persons at specific location of the construction site. As mentioned above, the various construction materials can be equipped with RFID tags, e.g. in the form of stickers applied on said materials. The vehicles and personal of the site can also be equipped with such tags. Other wireless detection technologies can be used like for example iBeacon®, proximity detectors, pressure detectors, contact detectors.

The onsite communication interfaces 14, 22 and 26 that are operatively connected to tools or devices like a crane, a jackhammer, an access door or portal, can also communicate in both directions with the computer unit 6. They can collect information about the status of the tools or devices and transmit it to the computer unit 6. They can also receive instructions from the computer unit 6 and execute such instructions on the tools or devices, like authorizing and/or blocking the operation of such tools or devices.

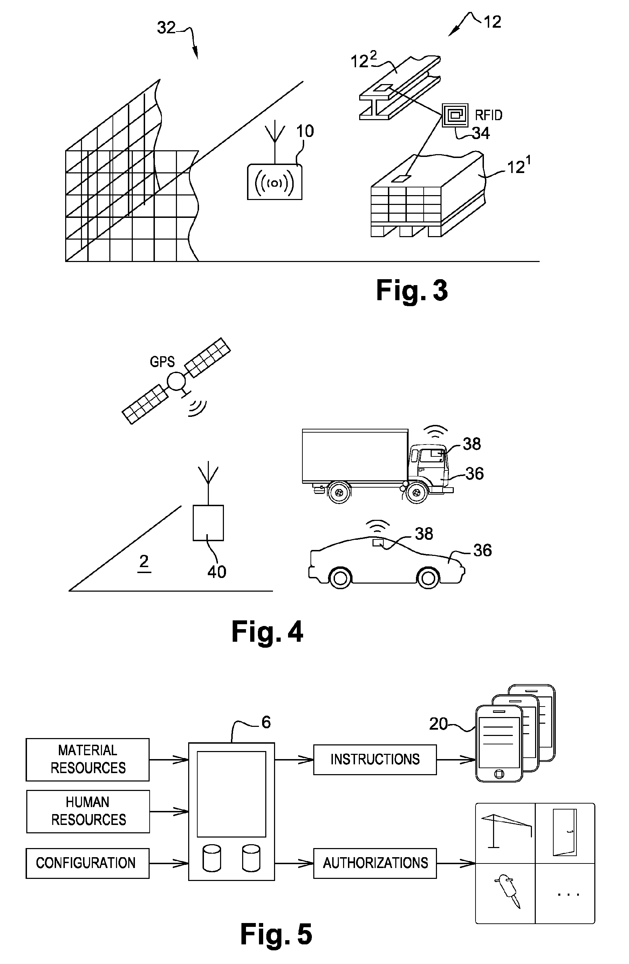

Figure 3 illustrates details of an area or location 32 of the construction site conceived for the storage of material 12. The location can be delimited by fences. The material 12 can comprise, for example, construction blocks 12¹ disposed on a pallet. It can also comprise a steel beam 12². On each of these materials a RFID tag 34 can be attached, advantageously adhered. Each tag 34 is configured for carrying an identifier, like a series of numbers and/or letters. A RFID communication interface 10 is provided at the location 32 or at least at a distance that allows a proper communication with the tags on the materials stored on that location.

The tags can be applied to the different material by the supplier. They can also be applied at the entrance of the construction site. They can also be applied once they are unloaded at the corresponding location. It is indeed common that different units of constructions material are moved several time during a construction project, so that providing them with tags once they are unloaded at a given location is still useful for controlling and managing the construction project.

Figure 4 illustrates construction or logistics vehicles 36 located at the construction sites and equipped with GPS beacons 38 that communicate the location of the vehicles to a communication interface 40 that is advantageously located at the constructions site. This interface 38, like the other communication interfaces described above, is configured for communicating, preferably wirelessly, with the computer unit. The location of the vehicles can then be transmitted in real time to the computer unit 6. Additionally, the GPS beacon 38 can also comprise means that prevents the use of the vehicles, like an engine immobilizer. This permits the computer unit to reserve one or several vehicles for specific tasks.

In figure 5, the functioning principle of the control system of the construction site is illustrated. The computer unit 6 is loaded with computer instructions that allow it to perform control tasks of the construction site. The computer unit 6 collects automatically via the different communication interfaces that have been described above the material resources. It can also collect automatically the human resources. These resources can also be entered manually. The computer unit 6 has also to be configured with particulars of the construction site like the construction drawings, in particular in editable format, like in a CAD (Computer Aided Design) format. The computer unit can then be configured to automatically schedule construction tasks based on the available material, the available manpower and the configuration of the construction site and the construction(s) to be built. Different task notices can be issued and sent to the handheld communication device(s) for informing the relevant person of the task(s) to be carried-out. In order to provide a secure and reliable scheduling, the use of different tools or the access to materials and/or vehicles can be controlled by authorizing or preventing operation thereof.

## Claims

1. Method for controlling a construction site (2), said method automatically scheduling, via a computer (6), building tasks involving the use of building materials (12, 12¹, 12²) and/or tools (24, 28, 30, 36) on said site;
**characterized in that**
- the building materials (12, 12¹, 12²) and/or the tools (24, 28, 30, 36) are equipped with wireless communication interfaces (10/34, 22, 26, 38/40);
- the construction site (2) comprises at least one wireless communication station (8) communicating with the wireless communicating interfaces (10/34, 22, 26, 38/40) of the building materials (12, 12¹, 12²) and/or of the tools (24, 28, 30, 36);
- the automatic tasks scheduling verifies the availability on the site of at least one of the building materials (12, 12¹, 12²) and/or of at least one of the tools (24, 28, 30, 36), and/or authorizes the operation of at least one of the tools (24, 28, 30, 36), via the at least one wireless communication station (8) and the wireless communication interfaces (10/34, 22, 26, 38/40).

2. Method according to claim 1, **characterized in that** the automatic tasks scheduling comprises the issuance and transmission of task notices to mobile devices (20).

3. Method according to claim 2, **characterized in that** at least one of the task notices is issued and send to the mobile devices (20) only when the availability of the building material(s) (12, 12¹, 12²) and/or of the tool(s) (24, 28, 30, 36) required for said task(s) has been positively verified.

4. Method according to one of claims 2 and 3, **characterized in that** the issuance of at least one task notice is accompanied by the issuance of a signal to the tool(s) (24, 28, 30, 36), said signal authorizing operation of said tool(s).

5. Method according to claim 4, **characterized in that** the tool(s) (24, 28, 30) whose operation is authorized together with the issuance of the task notice(s) corresponds to the task(s) of said task notice(s).

6. Method according to any one of claims 1 to 5, **characterized in that** the wireless communication interfaces comprise tags (34) and wireless, preferably RFID, tag detector(s) (10), said tags (34) being applied onto the building material(s) (12, 12¹, 12²).

7. Method according to claim 6, **characterized in that** the tags (34) are applied to the building material(s) (12, 12¹, 12²) before it/their discharge at the construction site (2), preferably before its/their arrival at the site (2), so as to permit the automatic detection of its/their availability.

8. Method according to any one of claims 1 to 7, **characterized in that** the building materials (12) are taken from the following list: metallic beams (12²), concrete beams, wood beams, concrete reinforcing mesh, cement, building blocks (12¹), tiles, insulation material, and any combination thereof.

9. Method according to any one of claims 1 to 8, **characterized in that** the verification of the availability on the site (2) of the building materials (12, 12¹, 12²) is made at different locations of the site, said verification being location dependent.

10. Method according to claim 9, **characterized in that** the at least one wireless communication station (8) comprises several wireless communication stations at different distant locations of the site.

11. Method according to any one of claims 1 to 10, **characterized in that** the site comprises at least one area (16) having a controlled access (18) operated through a communication interface (14) communicating with the at least one communication station (8), the automatic tasks scheduling authorizing access said area(s) (16), and preferably wherein the access to the at least one area (16) with controlled access is controlled by electrically controlled lock(s).

12. Method according to any one of claims 1 to 11, **characterized in that** the tools are taken from the following list: drilling machine, jackhammer (30), concrete mixer, compressor for pneumatic jackhammer (28), crane (24), construction vehicle(s) (36) and any combination thereof.

13. Method according to any one of claims 1 to 12, **characterized in that** the tool(s) comprise at least one vehicle (36) equipped with a GPS beacon (38) communicating the GPS location of said vehicle(s) to at least one of the communication interfaces (40).

14. Method according to any one of claims 1 to 13, **characterized in that** the automatic tasks scheduling prevents access to at least one of the materials (12, 12¹, 12²) and/or tools (28, 30, 36), and/or prevents the operation of at least one of the tools (24, 28, 30, 36), via the wireless communication station (8) and the wireless communication interfaces (10/34, 14, 22, 26, 38/40), said material(s) and tool(s) being needed for a future task.

15. System (4) for controlling a construction site (2), comprising:
- a computer (6);
- at least one wireless communication station (8) to be located onsite (2) and configured for communicating with the computer (6);
- at least one wireless communication interface (10/34, 14, 22, 26, 38/40) configured for communicating with the at least one communication station (8);
**characterized in that**
the at least one wireless communication interface (10/34, 14, 22, 26, 38/40) is operatively associated to at least one building material and/or is operatively connected to at least one tool for authorizing operation of said tool and/or is operatively connected to a controlled access (18) to building material(s) and/or tool(s); and the computer is configured executing the method according to any one of claims 1 to 14.
